# EUROPÄISCHE PATENTANMELDUNG

(11) **EP 3 296 058 A2**
(43) Veröffentlichungstag der Anmeldung: **21.03.2018**
(21) Anmeldenummer: 17191621.6
(22) Anmeldetag: 18.09.2017
(51) Int. Cl.: B23Q 11/00, B28D 7/02, B23B 47/34

(54) **BOHRLOCHREINIGUNGSVORRICHTUNG**

(30) Priorität: 20.09.2016 DE 102016117687
(71) Anmelder: DreBo Werkzeugfabrik GmbH, D-88361 Altshausen (DE)
(72) Erfinder: Sutej, Oliver, 88356 Ostrach (DE); Eggers, Rainer, 88356 Ostrach (DE); Stumpp, Martin, 88214 Ravensburg (DE)
(74) Vertreter: Baronetzky, Klaus

(57) **Zusammenfassung**

Die Erfindung betrifft eine Bohrlochreinigungsvorrichtung mit einer Überdruckquelle, die an eine Rohr-/Schlaucheinheit angeschlossen ist. Die Vorrichtung weist eine Führungsvorrichtung (8) auf, über welche sie in einem Bohrloch (10) insbesondere translatorisch beweglich ist und welche das vordere Ende der Rohr-/Schlaucheinheit (6) in dem Bohrloch (10) zentriert. Jenseits der Führungsvorrichtung (8), also am vorderen Ende der Rohr-/Schlaucheinheit (6), ist die Mündung (12) einer Unterdruckleitung (2) vorgesehen. Die Mündung (14) einer Überdruckleitung (4) ist von dieser beabstandet angeordnet.

Die Erfindung betrifft außerdem eine Bohrlochreinigungsvorrichtung mit einer Rohr-/Schlaucheinheit. Die Vorrichtung weist eine Führungsvorrichtung (8) auf, über welche sie in einem Bohrloch (10) insbesondere translatorisch beweglich ist und welche das vordere Ende der Rohr-/Schlaucheinheit (6) in dem Bohrloch (10) zentriert. Jenseits der Führungsvorrichtung (8), also am vorderen Ende der Rohr-/Schlaucheinheit (6), ist die Mündung (12) einer Unterdruckleitung (2) vorgesehen ist.

Die Erfindung betrifft zudem eine Bohrlochreinigungsvorrichtung mit einer Überdruckquelle (60), die an eine Rohr-/Schlaucheinheit (6) angeschlossen ist. Die Vorrichtung weist eine Führungsvorrichtung (8) auf, über welche sie in einem Bohrloch (10) insbesondere translatorisch beweglich ist und welche das vordere Ende der Rohr-/Schlaucheinheit (6) in dem Bohrloch (10) zentriert. Die Mündung (12) einer Unterdruckleitung (2) ist an der Rohr-/Schlaucheinheit (6) vorgesehen. Die Mündung (14) einer Überdruckleitung (4) ist von dieser beabstandet angeordnet. Die Führungsvorrichtung (8), die insbesondere in Bürstenform vorliegt, ist in ihrer Form und/oder in ihrem Durchmesser (34) änderbar.

## Beschreibung

Die Erfindung betrifft eine Bohrlochreinigungsvorrichtung gemäß den Oberbegriffen der Ansprüche 1, 2 und 11.

Die Reinigung von Bohrlöchern ist günstig und in manchen Fällen erforderlich für die Dübelmontage und Befestigungssysteme, die auf Klebstoffbasis erfolgen. Eine Bohrlochreinigung umfasst im Wesentlichen das Entfernen von Bohrklein und Bohrstaub aus einem Bochloch, was beispielsweise durch Bürsten und Ausblasen realisiert werden kann.

Jedoch führen die bekannten Verfahren zur Bohrlochreinigung ggf. zu einer gesundheitsschädlichen Kontamination der Umgebung mit lungengängigem Feinstaub.

Handbetätigte Pumpen und Bürsten, aber auch Druckluftkompressoren und Staubsauger werden typischerweise zur Bohrlochreinigung verwendet. Diese gewährleisten zwar bei korrektem Einsatz ein gereinigtes Bohrloch. Allerdings ist die Emission von Feinstaub nur bedingt zu vermeiden. Die oben genannten Geräte sind bisher nur nacheinander zu betreiben. Beispielsweise wird ein Druckluftkompressor mit seiner Luftleitung zunächst verwendet, um Bohrmehl im Bohrloch aufzuwirbeln. Anschließend ist die Luftleitung des Druckluftkompressors aus dem Bohrloch herauszuziehen. Erst dann kann ein Staubsauger mit seinem Saugrohr zum Absagen von Bohlmehl zum Einsatz kommen. Es besteht die Gefahr, dass die Reinigung eines Bohrlochs vom Monteur versehentlich weggelassen oder nur mangelhaft ausgeführt wird.

Obwohl bereits Werkzeuge und Geräte, bei denen während des Bohrbetriebs weniger Staub entsteht, zum Einsatz kommen, ist eine kompakte Systemlösung für die Bohrlochreinigung bisher nicht verfügbar.

Es sind auch andere Lösungen bekannt wie z.B. ein Hohlbohrer, der den Bohrstaub und das Bohrklein während des Bohrens direkt absaugt. Diese Lösung ist vergleichsweise teuer und nicht mit allen Dübelarten kompatibel sowie nicht im gesamten Durchmesserspektrum von Bohrern erhältlich.

Ein derartiger Hohlbohrer ist aus der DE 195 12 401 C1 bekannt. Die beim Bohren entstehenden Bohrspäne werden durch mindestens eine dortige Saugöffnung in der Wand des Hohlbohrers und durch den Innenraum desselben abgesaugt.

Die DE 10 2013 207 661 A1 offenbart einen Bohrer zum Bohren und Reinigen eines Bohrlochs. Der dortige Bohrer weist einen endseitigen Bohrabschnitt zum Abtragen von Material unter Bildung von Bohrmehl beim Bohren des Bohrlochs auf. Außerdem ist ein sich an den Bohrabschnitt anschließender Schaftabschnitt mit abschnittsweise über den Bohrabschnitt radial hinausstehenden Bohrlochreinigungselementen vorgesehen, die zum Entfernen eines Teils des Bohrmehls aus dem Bohrloch dienen.

Demgegenüber liegt der Erfindung die Aufgabe zugrunde, eine Bohrlochreinigungsvorrichtung gemäß dem Oberbegriff von Anspruch 1 oder 2 oder 11 zu schaffen, die eine kompakte Systemlösung für die Bohrlochreinigung bietet, kostengünstiger zu realisieren ist und die gesundheitsschädliche Kontamination der Umgebung vermeiden soll.

Diese Aufgabe wird erfindungsgemäß durch die Ansprüche 1, 2 und 11 gelöst. Vorteilhafte Weiterbildungen ergeben sich aus den Unteransprüchen.

Die erfindungsgemäße Bohrlochreinigungsvorrichtung weist eine Führungsvorrichtung und eine Unterdruckleitung auf, die mit einer Unterdruckquelle verbunden ist. Beim Reinigungsprozess bewegt sich die Führungsvorrichtung translatorisch in einem Bohrloch. Das Bohrklein und der Bohrstaub werden dadurch von der Innenwand abgelöst und sofort durch die Unterdruckleitung abgesaugt.

Die erfindungsgemäße Bohrlochreinigungsvorrichtung ist überraschend recht einfach zu bedienen. Während des Reinigungsprozesses braucht der Monteur lediglich bei Bedarf eine Steuereinheit zu betätigen, damit ein Luftstrom aus der Mündung einer Überdruckleitung in das Bohrloch hineinströmt und das Bohrklein und den Bohrstaub, welches und welcher während des Bohrens an der Innenwand eines Bohrlochs leicht anhaftet, von dieser Innenwand fortbläst. Das fortgeblasene Bohrklein und der Bohrstaub werden sofort durch eine Unterdruckleitung abgesaugt.

Erfindungsgemäß ist eine Systemlösung für die Bohrlochreinigung vorgesehen. Die Funktionen von Bürsten, Staubsaugern und ggf. Druckluftkompressoren werden in einer günstigen Weise in der erfindungsgemäßen Bohrlochreinigungsvorrichtung integriert, so dass die jeweilige Funktionen gleichzeitig und unabhängig voneinander erreicht werden können. Dadurch ist unter anderem die Reinigungszeit im Vergleich zum Stand der Technik, bei dem ein serieller Betrieb von entsprechenden Geräten vorgenommen wird, deutlich verringert.

Außerdem wird durch die kompakte Systemlösung eine falsche Handhabung vermieden, die z.B. vom Bediener während des Wechsels der oben genannten seriell betriebenen Geräte fahrlässig verursacht werden könnte.

In einer bevorzugten Ausführungsform ist eine Überdruckleitung vorgesehen, die mit einer Überdruckquelle verbunden ist und, wie oben bereits erläutert, zum Fortblasen des Bohrstaubs und Bohrkleins von der Innenwand dient.

Aufgrund der Porosität einer typischen Betonwand wird die Luft im Bochloch durch die Überdruckleitung in die Innenwand hineingeblasen. Bei dem Bereich der Innenwand, an dem ein Unterdruck vorliegt, wird die Luft abgesaugt. Dadurch wird der an der Innenwand anheftende Bohrstaub und das Bohrklein durch die in diesem Bereich der Innenwand entstehenden "Impulse" der Luft von der Innenwand entfernt und sofort mit abgesaugt.

Die Unter- und Überdruckleitung sind in einer Rohr-/Schlaucheinheit angeordnet, deren vorderes Ende sich im Bohrloch befindet und durch die Führungsvorrichtung dort zentriert wird.

Am vorderen Ende der Rohr-/Schlaucheinheit ist die Mündung der Unterdruckleitung vorgesehen, von welcher die Mündung der Überdruckleitung beabstandet angeordnet ist, und zwar so, dass die Mündung der Überdruckleitung die der Unterdruckleitung überragt, insbesondere um mehr als 5 mm, bevorzugt um mehr als 20 mm. Alternativ kann die Mündung der Unterdruckleitung auch jenseits der beispielsweise als Bürste ausgebildeten Führungsvorrichtung vorgesehen sein. Mit dieser Konstellation wird vermieden, dass der aus der Überdruckleitung ausgeblasende Luftstrom sofort durch die Unterdruckleitung abgesaugt wird.

In einer bevorzugten Ausführungsform sind eine Mehrzahl der Überdruck- und/oder Unterdruckleitungen vorgesehen. Es ist mindestens eine Unterdruckleitung radial außerhalb mindestens einer Überdruckleitung angeordnet. Bevorzugt sind eine Mehrzahl der Unterdruckleitungen um mindestens eine Überdruckleitung benachbart im Bohrloch angeordnet.

Diese Ausgestaltung hat unter anderem den Vorteil, dass möglichst ein Unterdruck außen an der Rohr/Schlaucheinheit, also entlang der Erstreckung der Rohr/Schlaucheinheit zwischen dieser und der Innenwand des Bohrlochs, anliegt, damit das an der Innenwand des Bohrlochs leicht anhaftende und durch die Führungsvorrichtung abgelöste Bohrklein und der Bohrstaub durch den Unterdruck abgesaugt werden.

Erfindungsgemäß ist es vorgesehen, dass der Druck innerhalb des Bohrlochs geringer als der Druck außen an dem Bohrloch ist, so dass innerhalb des Bohrlochs ein Unterdruck vorliegt, um die ansonsten durch das Bohrmehl verursachte Kontamination der Umgebung zu vermeiden.

Der Druckverlauf innerhalb des Bohrlochs basierend auf dem Unterdruck, der von der Unterdruckquelle erzeugt ist, und dem Überdruck, der von der Überdruckquelle erzeugt ist. Bevorzugt beträgt der Differenzdruck innerhalb des Bohrlochs 0,5 bis 3 bar.

In einer bevorzugten Ausführungsform ist es vorgesehen, dass die Unterdruckquelle einen Filter aufweist, der vor der Unterdruckquelle die Luft vom Bohrstaub und Bohrklein reinigt.

In einer weiteren bevorzugten Ausführungsform ist es vorgesehen, dass die Führungsvorrichtung eine Radialbürste aufweist, deren Borsten sich etwa senkrecht zu der Führungsrichtung der Führungsvorrichtung und/oder zur Erstreckung der Rohr/Schlaucheinheit um das vordere Ende der Rohr-/Schlaucheinheit erstrecken.

Zwischen den Borsten sind in an sich bekannter Weise freie Räume vorgesehen. Während der translatorischen Bewegung der Führungsvorrichtung lösen die Borsten Bohrmehl an der Innenwand des Bohrlochs ab. Durch die Federwirkung der Borsten entsteht aus der Bohrmehlschicht ein Bohrmehlnebel. Die Bohrmehlkörner werden wegen des Unterdrucks direkt oder durch die freien Räume abgesaugt.

Der radiale Durchmesser der Radialbürste beträgt z.B. zwischen 4 und 70 mm, insbesondere zwischen 6 und 30 mm. Die Rohr-/Schlaucheinheit ist zwischen 30 mm und 2200 mm, insbesondere zwischen 60 mm und 1200 mm, lang.

In einer bevorzugten Ausführungsform ist es vorgesehen, dass die Führungsvorrichtung in ihrer Form und/oder in ihrem Durchmesser änderbar ist, um an die Form und den Durchmesser von verschiedenen Bohrlöchern anpassen zu können.

In einer weiteren bevorzugten Ausführungsform ist es vorgesehen, dass die Führungsvorrichtung igelförmig ist und Spikes aufweist, die insbesondere aus Hartmetall bestehen und im Wesentlichen die gleiche Länge aufweisen.

In einer weiteren bevorzugten Ausführungsform ist es vorgesehen, dass die Führungsvorrichtung, insbesondere diese in Igelform, durch die Überdruckleitung aufblasbar ist. Je mehr Volumenstrom durch die Überdruckleitung in die Führungsvorrichtung hineingeblasen werden sollte, desto größer ist der Durchmesser der Führungsvorrichtung ausgelegt. Insofern ist eine Anpassung der Führungsvorrichtung an den Durchmesser eines Bohrlochs möglich.

Durch die Überdruckleitung ist erfindungsgemäß ein Überdruck innerhalb der Führungsvorrichtung vorgesehen, durch den ein Anpressdruck der Spikes an der Innenwand des Bohrlochs vorgesehen ist. Der Anpressdruck ist im Wert änderbar.

Es kann erfindungsgemäß durch die Änderung des Anpressdrucks eine vorgegebene konstante Auszugskraft der Spikes in Höhe von z.B. 30 Newton auch bei unterschiedlichen Bohrlochdurchmessern erreicht werden. Dadurch ist eine bessere Kontrolle der Reinigung von Bohrlöchern möglich.

Die Spikes an der Innenwand des Bohrlochs bilden mit dieser einen Winkel, der insbesondere zwischen 15° und 90° beträgt.

Erfindungsgemäß ist es vorgesehen, dass die Bohrlochreinigungsvorrichtung eine Manschette aufweist, die an die Rohr-/Schlaucheinheit angeschlossen und an dem Eingang des Bohrlochs anmontierbar ist. Der radiale Außendurchmesser der Manschette ist größer als der des Bohrlochs, und das Bohrloch kann durch die Manschette abgedichtet werden, so dass die Kontamination der Umgebung durch Bohrmehl bei der Reinigung von Bohrlöchern sicher vermieden wird.

In einer weiteren bevorzugten Ausführungsform ist es vorgesehen, dass eine Markierung an der Manschette und/oder an einer Wand in der Nähe des Bohrlochs durch einen Markierer, insbesondere ein Druckkissen oder ein Stempelkissen oder einen Prägestempel, hinterlassbar ist. Die Markierung erlaubt z.B. einen Rückschluß auf die Verwendung der erfindungsgemäßen Bohrlochreinigungsvorrichtung, das ausführende Unternehmen sowie das Reinigungsdatum.

In einer weiteren bevorzugten Ausführungsform ist es vorgesehen, dass eine Druckfeder an die Manschette angeschlossen ist, welche Druckfeder sich von der Manschette zum hinteren Ende der Rohr-/Schlaucheinheit hin erstreckt. Durch den durch die Druckfeder an der Manschette ausgeübten Anpressdruck wird die Abdichtung der Manschette an dem Bohrloch verbessert.

In einer weiteren bevorzugten Ausführungsform ist es vorgesehen, dass die erfindungsgemäße Bohrlochreinigungsvorrichtung eine zweite Unterdruckleitung aufweist, die an die Unterdruckquelle angeschlossen ist. Diese zweite Unterdruckleitung kann während der Bohrlochreinigung die Aufgabe eines Entstaubers für ein zweites Bohrloch übernehmen.

In einer weiteren bevorzugten Ausführungsform ist es vorgesehen, dass die Überdruckquelle eine Kompressoreinheit und/oder eine Druckluftkartusche aufweist, die die Druckluft bereitstellt.

Weitere Vorteile, Einzelheiten und Merkmale ergeben sich aus der nachstehenden Beschreibung von Ausführungsbeispielen der Erfindung anhand der Zeichnungen.

Es zeigen:
- Fig. 1: eine schematisch dargestellte Ausführungsform der erfindungsgemäßen Bohrlochreinigungsvorrichtung in Seitenansicht;
- Fig. 2: die Ausführungsform der erfindungsgemäßen Bohrlochreinigungsvorrichtung gemäß Fig. 1, in der Richtung V betrachtet; und
- Fig. 3: eine andere Ausführungsform der erfindungsgemäßen Bohrlochreinigungsvorrichtung, in der Richtung V betrachtet.

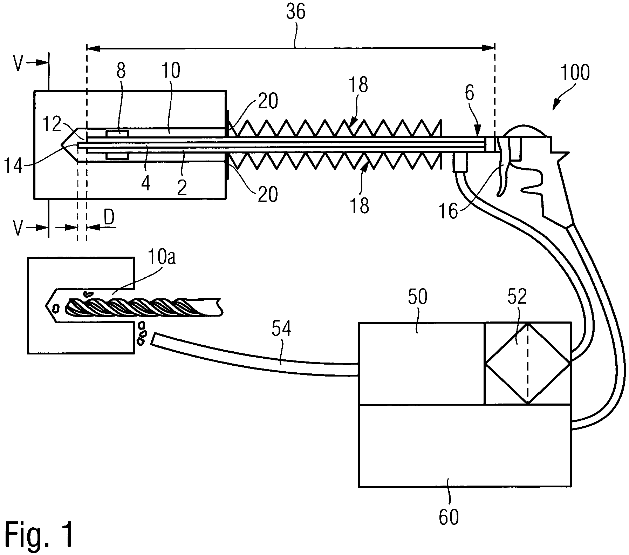

Die in Fig. 1 dargestellte Ausführungsform der erfindungsgemäßen Bohrlochreinigungsvorrichtung 100 weist eine Überdruckquelle 60, eine Unterdruckquelle 50, eine Überdruckleitung 4, eine Unterdruckleitung 2, eine Führungsvorrichtung 8 in Bürstenform, eine Rohr-/Schlaucheinheit 6, eine Manschette 20 sowie eine Steuereinheit 16 in Pistolenform auf. Dies Rohr-/Schlaucheinheit 6 besteht aus Kunststoff, Stahl und/oder aus Aluminium. Im vorliegenden Ausführungsbeispiel ist der vordere Teil ein Stahlrohr und der rückwärtige Teil ein flexibler, aber druckfester Kunststoffschlauch.

Die Überdruckleitung 4 und Unterdruckleitung 2 sind je mit der Überdruckquelle 60 und Unterdruckquelle 50 verbunden. Die Steuereinheit 16 ist zwischen der Überdruckleitung 4 und der Überdruckquelle 60 angeordnet und kontrolliert insofern den Luftstrom aus der Überdruckquelle 60.

Beim Reinigungsprozess bewegt sich die Führungsvorrichtung 8 translatorisch in dem Bohrloch 10. Das Bohrklein und der Bohrstaub werden dadurch von der Innenwand entfernt und sofort durch die Unterdruckleitung 2 abgesaugt.

Bei Bedarf ist die Steuereinheit 16 zu betätigen, damit ein Luftstrom aus der Mündung 14 der Überdruckleitung 4 in das Bohrloch 10 hineinströmt und dann das Bohrklein und den Bohrstaub, welches und welcher während des Bohrens an der Innenwand des Bohrlochs 10 leicht anhaftet, von dieser Innenwand fortbläst. Das fortgeblasene Bohrklein und der Bohrstaub werden sofort durch die Unterdruckleitung 2 abgesaugt.

Die Unterdruckleitung 2 und Überdruckleitung 4 sind in der Rohr-/Schlaucheinheit 6 angeordnet, deren vorderes Ende sich im Bohrloch 10 befindet und durch die Führungsvorrichtung 8 dort zentriert wird.

Am vorderen Ende der Rohr-/Schlaucheinheit 6 ist die Mündung 12 der Unterdruckleitung 2 vorgesehen. Die Mündung 14 der Überdruckleitung 4 überragt die der Unterdruckleitung 12 um etwa 20 mm (in Fig. 1 mit dem Buchstaben "D" dargestellt). Mit dieser Ausgestaltung wird vermieden, dass der aus der Überdruckleitung 4 ausgeblasende Luftstrom sofort durch die Unterdruckleitung 2 abgesaugt wird.

Die Länge 36 der Rohr-/Schlaucheinheit 6 beträgt im vorliegenden Ausführungsbeispiel etwa 1100 mm, die Wandstärke etwa 1,5 mm, wobei das letztere material- und größenabhängig zwischen 0,5 und 4 mm betragen kann.

Der Druck innerhalb des Bohrlochs 10 ist geringer als der Druck außen an dem Bohrloch 10, so dass innerhalb des Bohrlochs 10 ein Unterdruck vorliegt, um eine durch das Bohrmehl verursachte Kontamination der Umgebung zu vermeiden.

Der Differenzdruck innerhalb des Bohrlochs 10 ergibt sich aus dem Unterdruck, der von der Unterdruckquelle 50 erzeugt ist, und aus dem Überdruck, der von der Überdruckquelle 60 erzeugt ist. Der Unterdruck innerhalb des Bohrlochs 10 beträgt in der gemäß Fig. 1 dargestellten Ausführungsform weniger als 1 bar.

Die Unterdruckquelle 50 weist einen Filter 52 auf, der vor der Unterdruckquelle die Luft vom Bohrstaub und Bohrklein 50 reinigt.

Die Manschette 20 ist an die Rohr-/Schlaucheinheit 6 angeschlossen und an dem Eingang des Bohrlochs 10 anmontiert. Der radiale Außendurchmesser der Manschette 20 ist größer als der des Bohrlochs 10. Das Bohrloch 10 ist erfindungsgemäß durch die Manschette 20 abgedichtet, damit die Kontamination der Umgebung durch Bohrmehl bei der Reinigung des Bohrlochs 10 vermieden wird.

Eine Markierung ist erfindungsgemäß an der Manschette 20 und/oder an einer Wand in der Nähe des Bohrlochs 10 durch einen Markierer (nicht in Fig. 1 dargestellt), insbesondere ein Druckkissen oder ein Stempelkissen oder einen Prägestempel, hinterlassbar. Die Markierung erlaubt einen Rückschluß auf die Verwendung der erfindungsgemäßen Bohrlochreinigungsvorrichtung 100, das ausführende Unternehmen sowie das Reinigungsdatum.

Eine Druckfeder 18 ist an die Manschette 20 angeschlossen und erstreckt sich von dieser zum hinteren Ende der Rohr-/Schlaucheinheit 6 hin. Die Druckfeder 18 übt einen Anpressdruck an der Manschette 20 aus. Dadurch wird erfindungsgemäß die Abdichtung der Manschette 20 an dem Bohrloch 10 verbessert.

Die erfindungsgemäße Bohrlochreinigungsvorrichtung 100 weist eine zweite Unterdruckleitung 54 auf, die an die Unterdruckquelle 50 angeschlossen ist. Diese zweite Unterdruckleitung 54 kann während der Bohrlochreinigung die Aufgabe eines Entstaubers für ein zweites Bohrloch 10a übernehmen.

Die Überdruckquelle weist eine Kompressoreinheit und/oder eine Druckluftkartusche (nicht in Fig. 1 dargestellt) auf, die die Druckluft bereitstellt.

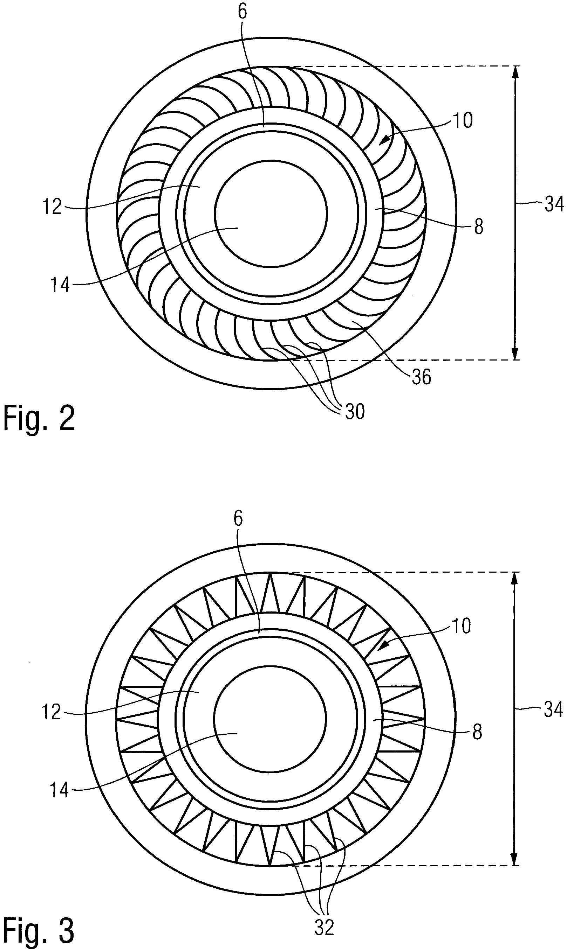

Aus Fig. 2 ist ersichtlich, dass die Führungsvorrichtung 8 in Form einer Radialbürste 8 ausgebildet ist, deren Borsten 30 sich etwa senkrecht zu der Führungsrichtung der Führungsvorrichtung 8 und/oder zur Erstreckung der Rohr/Schlaucheinheit 6 um das vordere Ende der Rohr-/Schlaucheinheit 6 erstrecken.

Zwischen den Borsten 30 sind in an sich bekannter Weise freie Räume 36 vorgesehen. Während der translatorischen Bewegung der Führungsvorrichtung 8 lösen die Borsten 30 Bohrmehl an der Innenwand des Bohrlochs 10 ab. Das abgelöste Bohrmehl wird wegen des Unterdrucks direkt oder durch die freien Räume 36 abgesaugt.

Der radiale Durchmesser 34 der Radialbürste 8 beträgt etwa 30 mm.

In der gemäß Fig. 3 dargestellten Ausführungsform ist es vorgesehen, dass die Führungsvorrichtung 8 igelförmig ist und Spikes 32 aufweist. Die Spikes 32 bestehen bevorzugt aus Hartmetall und weisen im Wesentlichen die gleiche Länge auf.

Die Führungsvorrichtung 8 in Igelform kann erfindungsgemäß durch die Überdruckleitung 4 aufgeblasen werden. Je mehr Volumenstrom durch die Überdruckleitung 4 in die Führungsvorrichtung 8 hineingeblasen werden sollte, desto größer ist der Durchmesser 34 der Führungsvorrichtung 8 ausgelegt. Insofern ist eine Anpassung der Führungsvorrichtung 8 an den Durchmesser des Bohrlochs 10 möglich.

Durch die Überdruckleitung 4 ist erfindungsgemäß ein Überdruck innerhalb der Führungsvorrichtung 8 vorgesehen, durch den ein Anpressdruck der Spikes 32 an der Innenwand des Bohrlochs 10 vorgesehen ist. Der Anpressdruck ist im Wert änderbar.

Es kann erfindungsgemäß durch die Änderung des Anpressdrucks eine vorgegebene konstante Auszugskraft der Spikes 32 in Höhe von z.B. 30 Newton auch bei unterschiedlichen Bohrlochdurchmessern erreicht werden. Dadurch ist eine bessere Kontrolle bei der Reinigung von Bohrlöchern möglich.

Die Spikes 32 an der Innenwand des Bohrlochs 10 bilden mit dieser einen Winkel, der gemäß Fig. 3 etwa 90° beträgt.

In einer weiteren bevorzugten Ausführungsform (nicht in den Figuren dargestellt) ist ein kleiner Kegel zwischen der Mündung 12 der Unterdruckleitung 2 und der Mündung 14 der Überdruckleitung 4 vorgesehen und an der Überdruckleitung 4 benachbart sowie insbesondere in der Richtung entlang der Führungsrichtung der Führungsvorrichtung 8 etwa symmetrisch angeordnet ist. Die Basis des Kegels ist bevorzugt der Mündung 14 der Überdruckleitung 4 zugewandt.

Der freie Bereich im Bohrloch 10 zwischen dem Kegel und der Innenwand des Bohrlochs 10 hat insofern einen relativ größeren Strömungswiderstand. Das führt zu einer höheren Strömungsgeschwindigkeit und einer verbesserten Saugwirkung für den Bohrstaub sowie das Bohrklein.

## Patentansprüche

1. Bohrlochreinigungsvorrichtung, mit einer Überdruckquelle, die an eine Rohr-/Schlaucheinheit angeschlossen ist, **dadurch gekennzeichnet, dass** die Vorrichtung eine Führungsvorrichtung (8), insbesondere eine Bürste, aufweist, über welche sie in einem Bohrloch (10) insbesondere translatorisch beweglich ist und welche das vordere Ende der Rohr-/Schlaucheinheit (6) in dem Bohrloch (10) zentriert, und dass jenseits der Führungsvorrichtung (8), also am vorderen Ende der Rohr-/Schlaucheinheit (6), die Mündung (12) einer Unterdruckleitung (2) vorgesehen ist, und die Mündung (14) einer Überdruckleitung (4) von dieser beabstandet angeordnet ist.

2. Bohrlochreinigungsvorrichtung mit einer Rohr-/Schlaucheinheit, **dadurch gekennzeichnet, dass** die Vorrichtung eine Führungsvorrichtung (8), insbesondere eine Bürste, aufweist, über welche sie in einem Bohrloch (10) insbesondere translatorisch beweglich ist und welche das vordere Ende der Rohr-/Schlaucheinheit (6) in dem Bohrloch (10) zentriert, und dass jenseits der Führungsvorrichtung (8), also am vorderen Ende der Rohr-/Schlaucheinheit (6), die Mündung (12) einer Unterdruckleitung (2) vorgesehen ist.

3. Bohrlochreinigungsvorrichtung nach Anspruch 1, **dadurch gekennzeichnet, dass** die Überdruckleitung (4) der Unterdruckleitung (2) benachbart angeordnet ist, wobei mindestens eine Unterdruckleitung (2) radial außerhalb mindestens einer Überdruckleitung (4) angeordnet ist.

4. Bohrlochreinigungsvorrichtung nach Anspruch 1 oder 3, **dadurch gekennzeichnet, dass** die Mündung (14) der Überdruckleitung (4) die der Unterdruckleitung (2) überragt, insbesondere um mehr als 5 mm, bevorzugt um mehr als 20 mm.

5. Bohrlochreinigungsvorrichtung nach Anspruch 1 oder 3 oder 4, **dadurch gekennzeichnet, dass** eine Unterdruckquelle (50) an die Rohr-/Schlaucheinheit (6) angeschlossen ist, die insbesondere einen Filter (52) aufweist, wobei der in der Unterdruckleitung (2) bestehende und von der Unterdruckquelle (50) erzeugte Volumenstrom größer als der in der Überdruckleitung (4) bestehende und von der Überdruckquelle (60) erzeugte Volumenstrom ist.

6. Bohrlochreinigungsvorrichtung nach Anspruch 1 oder einem der Ansprüche 3 bis 5, **dadurch gekennzeichnet, dass** ein innerhalb des Bohrlochs (10) aus dem Unterdruck, der von der Unterdruckquelle (50) erzeugt ist, und aus dem Überdruck, der von der Überdruckquelle (60) erzeugt ist, aufsummierter Druck geringer ist als der Druck außen an dem Bohrloch (10), welcher aufsummierte Druck insbesondere weniger als 1 bar beträgt.

7. Bohrlochreinigungsvorrichtung nach Anspruch 1 oder einem der Ansprüche 3 bis 6, **dadurch gekennzeichnet, dass** durch die Unterdruckquelle (50) ein Unterdruck außen an der Rohr-/Schlaucheinheit (6) anliegt.

8. Bohrlochreinigungsvorrichtung nach Anspruch 1 oder einem der Ansprüche 3 bis 7, **dadurch gekennzeichnet, dass** eine Steuereinheit (16), insbesondere eine Steuerpistole, zwischen der Überdruckleitung (4) und der Überdruckquelle (60) angeordnet und an diese beiden angeschlossen ist, wobei ein Luftstrom durch die Betätigung der Steuereinheit (16) aus der Mündung (14) der Überdruckleitung (4) in das Bohrloch (10) hineinströmt.

9. Bohrlochreinigungsvorrichtung nach einem der vorhergehenden Ansprüche, **dadurch gekennzeichnet, dass** die Führungsvorrichtung (8) eine Radialbürste aufweist, deren Borsten (30) sich etwa senkrecht zu der Führungsrichtung der Führungsvorrichtung (8) und/oder zur Erstreckung der Rohr/Schlaucheinheit (6) um das vordere Ende der Rohr-/Schlaucheinheit (6) erstrecken.

10. Bohrlochreinigungsvorrichtung nach Anspruch 9, **dadurch gekennzeichnet, dass** der radiale Durchmesser (34) der Radialbürste zwischen 4 und 70 mm, insbesondere zwischen 6 und 30 mm, beträgt, und dass die Rohr-/Schlaucheinheit (6) zwischen 30 mm und 2200 mm, insbesondere zwischen 60 mm und 1200 mm, lang ist.

11. Bohrlochreinigungsvorrichtung mit einer Überdruckquelle (60), die an eine Rohr-/Schlaucheinheit (6) angeschlossen ist, **dadurch gekennzeichnet, dass** die Vorrichtung eine Führungsvorrichtung (8) aufweist, über welche sie in einem Bohrloch (10) insbesondere translatorisch beweglich ist und welche das vordere Ende der Rohr-/Schlaucheinheit (6) in dem Bohrloch (10) zentriert, dass die Mündung (12) einer Unterdruckleitung (2) an der Rohr-/Schlaucheinheit (6) vorgesehen ist, dass die Mündung (14) einer Überdruckleitung (4) von dieser beabstandet angeordnet ist, und dass die Führungsvorrichtung (8), die insbesondere in Bürstenform vorliegt, in ihrer Form und/oder in ihrem Durchmesser (34) änderbar ist.

12. Bohrlochreinigungsvorrichtung nach Anspruch 11, **dadurch gekennzeichnet, dass** die Mündung (12) der Unterdruckleitung (2) zwischen der Führungsvorrichtung (8) und dem vorderen Ende der Rohr-/Schlaucheinheit (6) angeordnet ist.

13. Bohrlochreinigungsvorrichtung nach Anspruch 11 oder 12, **dadurch gekennzeichnet, dass** die Führungsvorrichtung (8) igelförmig ist und Spikes insbesondere aus Hartmetall aufweist, wobei die Spikes insbesondere im Wesentlichen die gleiche Länge (36) aufweisen.

14. Bohrlochreinigungsvorrichtung nach einem der Ansprüche 11 bis 13, **dadurch gekennzeichnet, dass** die Führungsvorrichtung (8) durch die Überdruckleitung (4) aufblasbar ist.

15. Bohrlochreinigungsvorrichtung nach einem der Ansprüche 11 bis 14, **dadurch gekennzeichnet, dass** durch die Überdruckleitung (4) ein Überdruck innerhalb der Führungsvorrichtung (8) vorgesehen ist, durch den ein Anpressdruck der Spikes an der Innenwand des Bohrlochs (10) vorgesehen, welcher im Wert insbesondere änderbar ist, wobei die Spikes an der Innenwand des Bohrlochs (10) mit dieser einen Winkel bilden, der insbesondere zwischen 15° und 90° beträgt.

16. Bohrlochreinigungsvorrichtung nach einem der vorhergehenden Ansprüche, **dadurch gekennzeichnet, dass** die Bohrlochreinigungsvorrichtung (100) eine Manschette (20) aufweist, die an die Rohr-/Schlaucheinheit (6) angeschlossen und an dem Eingang des Bohrlochs (10) anmontierbar ist, wobei der radiale Außendurchmesser der Manschette (20) größer als der des Bohrlochs (10) ist, und wobei das Bohrloch (10) insbesondere durch die Manschette (20) abdichtbar ist.

17. Bohrlochreinigungsvorrichtung nach einem der vorhergehenden Ansprüche, **dadurch gekennzeichnet, dass** eine Markierung an der Manschette (20) und/oder an einer Wand in der Nähe des Bohrlochs (10) durch einen Markierer, insbesondere ein Druckkissen oder ein Stempelkissen oder einen Prägestempel, hinterlassbar ist.

18. Bohrlochreinigungsvorrichtung nach einem der vorhergehenden Ansprüche, **dadurch gekennzeichnet, dass** an die Manschette (20) eine Druckfeder (18) angeschlossen ist, die sich von der Manschette (20) zum hinteren Ende der Rohr-/Schlaucheinheit (6) hin erstreckt.

19. Bohrlochreinigungsvorrichtung nach einem der vorhergehenden Ansprüche, **dadurch gekennzeichnet, dass** die Bohrlochreinigungsvorrichtung (100) eine zweite Unterdruckleitung (54), die an die Unterdruckquelle (50) angeschlossen ist, aufweist.

20. Bohrlochreinigungsvorrichtung nach Anspruch 1 oder einem der Ansprüche 3 bis 15, **dadurch gekennzeichnet, dass** die Überdruckquelle (60) eine Kompressoreinheit und/oder eine Druckluftkartusche aufweist, die die Druckluft bereitstellt.
